# EUROPÄISCHE PATENTSCHRIFT

(11) **EP 1 674 175 B1**
(45) Veröffentlichungstag und Bekanntmachung des Hinweises auf die Patenterteilung: **23.06.2010**
(21) Anmeldenummer: 05022108.4
(22) Anmeldetag: 11.10.2005
(51) Int. Cl.: B22C 9/10, B22D 29/00, B29C 33/52, B22C 7/02, B29C 33/44

(54) **Verfahren zur Herstellung oder Bearbeitung von Hohlkörpern**
Process for the production or working of hollow shaped bodies
Procédé de fabrication ou de façonnage de corps creux

(30) Priorität: 19.10.2004 DE 102004050770
(43) Veröffentlichungstag der Anmeldung: 28.06.2006
(73) Patentinhaber: Clariant Produkte (Deutschland) GmbH, 65929 Frankfurt am Main (DE)
(72) Erfinder: Bayer, Michael, Dl., 86672 Thierhaupten (DE); Hackenspiel, Elmar, 86637 Zusamaltheim (DE)

(56) Entgegenhaltungen:
- US-A- 5 922 252
- US-A1- 2003 160 356
- US-B1- 6 582 631

## Beschreibung

Die vorliegende Erfindung betrifft ein Verfahren zur Herstellung oder Bearbeitung von Hohlkörpern. Die Herstellung von Formkörpern aus Metallen durch spanende und durch nicht spanende Verfahren wie Kaltumformung ist bekannt. In der Kunststoffindustrie bedient man sich zusätzlich thermoplastischer oder duroplastischer Verfahren zur Herstellung von Formteilen. Damit lassen sich die meisten Geometrien darstellen. Dennoch stellt die Herstellung von Formkörpern mit komplexer Gestalt, insbesondere von Hohlformkörpern mit innenliegenden Hinterschneidungen und im Formkörper integrierten Radien und Bögen, die Technik immer wieder vor Probleme, da sie - falls überhaupt - nur schwer direkt hergestellt werden können.

Zur Herstellung derartiger komplexer Formkörper wird daher häufig auf das Verfahren der "verlorenen Kerne" zurückgegriffen, bei welchem man zunächst einen Kern herstellt, diesen zumindest teilweise mit mindestens einem Feststoff beschichtet und dann den Kern chemisch oder physikalisch entfernt.

Beispielsweise wird in DE 39 23 416 A1 die Herstellung von Hohlkörpern aus faserverstärkten Kunststoffen (FVK) mit thermoplastischer Matrix beschrieben. Dabei wird zunächst ein hermetisch verschlossener Hohlkern aus einem metallischen Werkstoff, der zuvor innen mit einer leicht verdampfenden Substanz bestückt wurde, mit dem FVK ummantelt. Zum Aushärten und Verdichten des FVK wird die Anordnung aufgeheizt. Anschließend wird der Hohlkern aus dem FVK-Formteil herausgelöst. Dieses Verfahren eignet sich jedoch nur für die Fertigung von thermoplastischen Faserverbundbauteilen. Darüber hinaus sind Metallkerne verhältnismäßig schwer und lassen sich nur mit hohem technischem Aufwand fertigen und entfernen. Dabei müssen, insbesondere wenn chemische Verfahren zur Entfernung der Kerne eingesetzt werden, entsprechend geeignete Anlagen mit den notwendigen Sicherheitsvorkehrungen bereitgestellt werden.

Die Verwendung von "verlorenen" Kernen auf Wachs-Basis ist ebenfalls aus dem Stand der Technik bekannt und wird beispielsweise in DE 26 43 128 A1 und DE 42 02 878 A1 beschrieben. Es hat sich jedoch in der Technik gezeigt, dass die üblichen Wachskerne eine begrenzte mechanische Festigkeit haben oder aufgrund ihrer geringen Härte mechanisch deformiert werden. Dies schränkt ihr mögliches Einsatzgebiet deutlich ein, weil die Formgebung vieler Kunststoffe um diese Kerne herum mit einer deutlichen mechanischen Beanspruchung - Biege- und Zugbeanspruchung - des Kernmaterials verbunden ist. Von diesen üblichen Wachsen, die Wachse auf Basis von Carnaubawachs, Paraffinen oder natürlichen Wachsen sind, werden größere Mengen an Kern-Material benötigt, da die Herstellung von formstabilen Wachs-Hohlkernen mit dünner Wandstärke technisch nahezu unmöglich ist. Die genannten Wachskerne sind darüber hinaus spröde und selbst unter Temperatureinwirkung nicht expandierbar, was für moderne Herstellverfahren in der Kunststoffindustrie unabdingbar ist. Übliche Wachse müssen zudem mit Füllstoffen modifiziert werden, um die Schrumpfung beim Übergang von flüssig nach fest zu minimieren. Dabei leiden wiederum mechanisch wichtige Eigenschaften.

Die Verwendung von Gipskernen ist ebenfalls, beispielsweise aus DE 42 02 878 A1, bekannt. Derartige Kerne sind wie Metallkerne verhältnismäßig schwer, unelastisch und lassen sich nur mit hohem technischen Aufwand fertigen. Darüber hinaus müssen sie nach der eigentlichen Bauteilfertigung im Säurebad herausgelöst werden, d.h. es müssen entsprechend geeignete Anlagen mit den notwendigen Sicherheitsvorkehrungen bereitgestellt werden.

In DE 39 00 206 A1 wird der Einsatz von "verlorenen" Kernen aus lithogenen Materialien, wie beispielsweise Kreide, Dolomit, Kaolin, Talkum oder Quarz beschrieben. Um die notwendige Anfangsstabilität zu erreichen, werden diese unplastischen Materialien mit einem temporären Bindemittel für keramische Massen auf der Basis von PVA und biologischen Quellmitteln gebunden. Gemäß der DE 39 00 206 A1 lässt die Stabilität des Kernes im Laufe des Gießprozesses durch Einwirkung von Druck und Temperatur nach, so dass sich der Kern am Ende des Gießprozesses durch geringe Krafteinwirkung in staubförmige Komponenten zerlegen lässt, bzw. einfach durch Wasser ausspülbar sein soll. In der Praxis hat sich jedoch herausgestellt, dass, insbesondere bei Formkörpern mit innenliegenden Hinterschneidungen und im Formkörper integrierten Radien und Bögen, eine vollständige Entfernung der Kernrückstände den Einsatz von Säuren und Laugen erfordert, welcher das Einsatzgebiet dieses Verfahrens deutlich limitiert, denn es müssen wiederum entsprechend geeignete Anlagen mit den notwendigen Sicherheitsvorkehrungen bereitgestellt werden.

Ein Nachteil, der allen genannten Kernmaterialien gemein ist, ist ihre geringere Elastizität und ihre geringe oder nicht vorhandene Thermoplastizität. Von der Technik werden jedoch "verlorene" Kerne gefordert, welche leicht formbar und gestaltbar sind, um die Herstellung der Formkörper weiter zu vereinfachen und zu rationalisieren. Ideal ist zusätzlich die mehrmalige Verwendbarkeit der Kernmaterialien. Dies ist kostengünstig und reduziert das Abfallvolumen.

Es bestand daher die Aufgabe, ein Verfahren zur. Herstellung und Bearbeitung von Hohlkörpern bereitzustellen, welches die Nachteile der bekannten Verfahren nicht aufweist und insbesondere die Herstellung von Formkörpern mit komplexer Gestalt, insbesondere von Hohlkörperformkörpern mit innenliegenden Hinterschneidungen und im Formkörper integrierten Radien und Bögen, ermöglicht und auf einfache Art und Weise großtechnisch und kostengünstig durchführbar ist. Die in dem Verfahren verwendeten Materialen sollten es ermöglichen, den Einsatz von gesundheitsgefährdenden Stoffen, insbesondere von Säuren und Laugen, zu vermeiden, so dass bei der Durchführung des Verfahrens keine besonderen Sicherheitsvorkehrungen getroffen und keine entsprechend geeigneten Betriebsanlagen konzipiert und bereitgestellt werden müssen. Die in dem Verfahren verwendeten Materialien sollten zudem vorzugsweise rückstandsfrei aus dem Hohlkörper entfernbar sein. Das Verfahren sollte außerdem universell einsetzbar sein und in Bezug auf das Material, aus dem der Hohlkörper gebildet werden soll, nicht auf die Verwendung einiger weniger Ausgangsmaterialien beschränkt sein.

Die Lösung der vorliegenden Aufgabe konnte überraschenderweise dadurch erreicht werden, dass das Verfahren zur Herstellung oder Bearbeitung der Hohlkörper unter Verwendung eines Materials durchgeführt wird, welches ein oder mehrere Metallocen-Polyolefinwachse und/oder deren Derivate, d.h. mit Metallocenkatalysatoren hergestellte Polyolefinwachse und/oder deren Derivate, enthält oder aus diesen Substanzen besteht.

Die US-A 6,582,631 beschreibt ein Verfahren zum Gießformen von optischen Kontaktlinsen, bei dem eine Gießmasse in eine linsenförmige Gießform eingefüllt und darin vernetzt wird, wobei die Gießform aus zwei gebogenen Segmenten besteht, von denen mindestens eines der Segmente ein Polyolefin enthält, das in Gegenwart von Metallocen als Katalysator hergestellt worden ist. Nach der daraus bekannten Lehre werden insbesondere Polyethylen oder Polypropylen als Polyolefine eingesetzt, was vor allem bei Polypropylen den Vorteil hat, dass das Material eine höhere Steifigkeit und Gebrauchstemperatur besitzt.

Überraschenderweise wurde demgegenüber gefunden, dass sich Metallocen-Polyolefinwachse besonders gut als Kernmaterial für die Herstellung von nichtmetallischen oder metallischen Hohlkörpern eignen. Es wurde außerdem gefunden, dass diese Metallocen-Polyolefinwachse aufgrund ihrer mechanischen Eigenschaften - Festigkeit und Elastizität - und ihrer thermischen Eigenschaften - niedrige Schmelzviskosität und gute Vergießbarkeit - sehr geeignet sind, um daraus mechanisch belastbare Kerne, wie sie zur Herstellung faserverstärkter Kunststoffteile benötigt werden, herzustellen. Es wurde außerdem gefunden, dass sich Kerne, die aus Metallocen-Polyolefinwachsen hergestellt worden sind, entweder thermischflüssig und/oder durch Auflösung mit Lösemittel rückstandsfrei aus dem Hohlkörper entfernen lassen.

Gegenstand der vorliegende Erfindung ist daher ein Verfahren zur Herstellung oder Bearbeitung von Hohlkörpern, wobei das Verfahren unter Verwendung eines Materials durchgeführt wird, welches ein oder mehrere Metallocen-Polyolefinwachse und/oder deren Derivate enthält oder aus diesen Substanzen besteht und das nach der Herstellung oder Bearbeitung der Hohlkörper wieder aus den Hohlkörpern entfernt wird.

In dem erfindungsgemäßen Verfahren wird vorzugsweise ein Material bestehend aus
a) Metallocen-Polyolefinwachs und/oder Derivaten davon, vorzugsweise Metallocen-Polyolefinwachs,
b) gegebenenfalls bis zu 99,9 Gew.-% eines weiteren Wachses oder Harzes,
c) gegebenenfalls bis zu 20 Gew.-% eines Antioxidans,
d) gegebenenfalls bis zu 50 Gew.-% eines pulverförmigen, im Metallocen-Polyolefinwachs unlöslichen Füllstoffes und
e) gegebenenfalls bis zu 20 Gew.-% eines färbenden Stoffes wie z.B. ein Pigment oder ein löslicher Farbstoff
verwendet.

Vorzugsweise beinhaltet das erfindungsgemäße Verfahren zur Herstellung der Hohlkörper folgende Schritte:
i) Formung eines Kernes aus einem Material enthaltend oder bestehend aus einem oder mehreren Metallocen-Polyolefinwachsen und/oder deren Derivaten und
ii) zumindest teilweises Aufbringen eines oder mehrerer Feststoffe auf den Kern.

Vorzugsweise sind die durch das erfindungsgemäße Verfahren hergestellten Hohlkörper ausgewählt aus metallischen Hohlbauteilen, faser- oder teilchenverstärkten Kunststoffteilen und Metallgießformen.

In einer besonders bevorzugten Ausführungsform des erfindungsgemäßen Verfahrens werden faser- oder teilchenverstärkte Kunststoffteile hergestellt, wobei das Material enthaltend oder bestehend aus einem oder mehreren Metallocen-Polyolefinwachsen und/oder deren Derivaten expandierbar ist. Bei dieser Ausführungsform kann durch die Ausdehnung des Kernmaterials beispielsweise bewirkt werden, dass die faser- oder teilchenverstärkten Kunststoffteile bei ihrer Herstellung in eine äußere Form eingepresst werden.

In einer weiteren besonders bevorzugten Ausführungsform des erfindungsgemäßen Verfahrens werden metallische Hohlbauteile hergestellt, wobei das Material enthaltend oder bestehend aus einem oder mehreren Metallocen-Polyolefinwachsen und/oder deren Derivaten als Bindemittel für die Herstellung leitfähiger Beschichtungen dient. Bei dieser Ausführungsform wird das Kernmaterial beispielsweise also zunächst mit einer leitfähigen Beschichtung versehen und anschließend die Metallschicht auf dieser leitfähigen Beschichtung aufgebracht.

In einer weiteren besonders bevorzugten Ausführungsform des erfindungsgemäßen Verfahrens werden Metallgießformen hergestellt, wobei das Material enthaltend oder bestehend aus einem oder mehreren Metallocen-Polyolefinwachsen und/oder deren Derivaten durch Eintauchen in eine feuerfeste Formmasse, die zunächst ausgehärtet und später gebrannt wird, beschichtet wird.

In einer weiteren bevorzugten Ausführungsform des erfindungsgemäßen Verfahrens, insbesondere bei der Herstellung von faser- oder teilchenverstärkten Kunststoffteilen, wird das eine oder die mehreren Metallocen-Polyolefinwachse und/oder deren Derivate zusammen mit mindestens einer weiteren Substanz ausgewählt aus natürlichen oder synthetischen Wachsen und natürlichen oder synthetischen Harzen eingesetzt.

Vorzugsweise beinhaltet das erfindungsgemäße Verfahren zur Bearbeitung der Hohlkörper folgende Schritte:
i) Ausfüllen des Hohlkörpers mit einem Material enthaltend oder bestehend aus einem oder mehreren Metallocen-Polyolefinwachsen und/oder deren Derivaten und
ii) Bearbeiten des ausgefüllten Hohlkörpers.

Bei der Bearbeitung der Hohlkörper nach dem erfindungsgemäßen Verfahren handelt es sich vorzugsweise um eine mechanische Bearbeitung.

Ein Vorteil des erfindungsgemäßen Verfahrens zur Bearbeitung der Hohlkörper ist darin zu sehen, dass die Hohlkörper bei der mechanischen Bearbeitung durch das Kernmaterial stabilisiert werden. Besonders bevorzugt erfolgt die Stabilisierung gegen Vibration.

Vorzugsweise wird das erfindungsgemäße Verfahren zur Herstellung oder Bearbeitung der Hohlkörper derart ausgeführt, dass das Material enthaltend oder bestehend aus einem oder mehreren Metallocen-Polyolefinwachsen und/oder deren Derivaten nach der Herstellung oder der Bearbeitung der Hohlkörper wieder aus dem Hohlkörper entfernt wird.

Besonders bevorzugt beinhaltet das erfindungsgemäße Verfahren zur Herstellung der Hohlkörper daher folgende Schritte:
i) Formung eines Kernes aus einem Material enthaltend oder bestehend aus einem oder mehreren Metallocen-Polyolefinwachsen und/oder deren Derivaten,
ii) zumindest teilweises Aufbringen eines oder mehrerer Feststoffe auf den Kern und
iii) Entfernen des Kernmaterials.

Besonders bevorzugt beinhaltet das erfindungsgemäße Verfahren zur Bearbeitung der Hohlkörper folgende Schritte:
i) Ausfüllen des Hohlkörpers mit einem Material enthaltend oder bestehend aus einem oder mehreren Metallocen-Polyolefinwachsen und/oder deren Derivaten,
ii) Bearbeiten des ausgefüllten Hohlkörpers und
iii) Entfernen des Kernmaterials.

Das Entfernen des Materials enthaltend oder bestehend aus einem oder mehreren Metallocen-Polyolefinwachsen und/oder deren Derivaten aus den hergestellten oder bearbeiteten Hohlkörpern erfolgt vorzugsweise durch Ausschmelzen und/oder Auflösen.

Entsprechend dem erfindungsgemäßen Verfahren ist ein weiterer Gegenstand der vorliegenden Erfindung auch die Verwendung von Metallocen-Polyolefinwachsen und/oder deren Derivaten zur Herstellung oder zur Bearbeitung von Hohlkörpern.

Als Metallocen-Polyolefinwachse kommen vorzugsweise Homopolymerisate des Ethylens oder Propylens oder Copolymerisate des Ethylens oder Propylens untereinander oder mit einem oder mehreren 1-Olefinen in Frage. Als 1-Olefine werden vorzugsweise lineare oder verzweigte Olefine mit 4-18 C-Atomen, besonders bevorzugt 4-6 C-Atomen, eingesetzt. Beispiele hierfür sind 1-Buten, 1-Hexen, 1-Octen oder 1-Octadecen, weiterhin Styrol. In einer besonders bevorzugten Ausführungsform der Erfindung sind die Metallocen-Polyolefinwachse Homopolymerisate des Ethylens oder Propylens, insbesondere des Propylens. In einer weiteren besonders bevorzugten Ausführungsform der Erfindung sind die Metallocen-Polyolefinwachse Copolymere des Ethylens mit Propen oder 1-Buten. Die aus Ethylen gebildeten Copolymeren bestehen vorzugsweise zu 70-99,9, besonders bevorzugt zu 80-99 Gew.-% aus Struktureinheiten abgeleitet von Ethylen. Besonders gut geeignet sind Metallocen-Polyolefinwachse mit einem Tropfpunkt zwischen 70 und 160°C, bevorzugt zwischen 100 und 155°C, einer Schmelzviskosität bei 140°C zwischen 10 und 10000 mPa.s, bevorzugt zwischen 50 und 5000 mPa.s, und einer Dichte bei 20°C zwischen 0.89 und 1.20 g/cm³, bevorzugt zwischen 0,91 und 0,94 g/cm³.

Die in dem erfindungsgemäßen Verfahren eingesetzten Metallocen-Polyolefinwachse haben eine Mindestzugfestigkeit von 10 N/mm² bei einer Bruchdehnung von mindestens 2 %.
Sie sind undurchsichtig, opak oder auch transluzent bis durchsichtig.
Werden die Metallocen-Polyolefinwachse nicht zu Formteilen verarbeitet, so können auch Halbzeuge wie Folien, Rohre oder Profile aus diesen Polyolefinwachsen zum Einsatz kommen.

Metallocenkatalysatoren zur Herstellung der Polyolefinwachse sind chirale oder nichtchirale Übergangsmetallverbindungen der Formel M¹Lₓ. Die Übergangsmetallverbindung M¹Lₓ enthält mindestens ein Metallzentralatom M¹, an das mindestens ein π-Ligand, z.B. ein Cyclopentadienylligand, gebunden ist. Darüber hinaus können Substituenten, wie z.B. Halogen-, Alkyl-, Alkoxy- oder Arylgruppen an das Metallzentralatom M¹ gebunden sein. M¹ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z.B. beschrieben in EP 632 063.

Beispiele für allgemeine Strukturformeln von Metallocenen sowie für deren Aktivierung mit einem Cokatalysator sind u.a. in EP 571 882 gegeben.
Geeignet sind weiterhin polar modifizierte Metallocenwachse.

Die polare Modifizierung dieser Metallocen-Polyolefinwachse kann durch Oxidation mit Sauerstoff oder sauerstoffhaltigen Gasen unter- oder oberhalb des Schmelzpunkts erfolgen. Vorzugsweise wird dabei das Wachs im schmelzflüssigen Zustand bei Temperaturen zwischen dem Schmelzpunkt des Wachses und 200°C durch Einleiten von Sauerstoff oder Sauerstoff enthaltenden Gasen, bevorzugt Luft, oxidiert. Die durch Oxidation modifizierten Wachse weisen Säurezahlen zwischen 0,1 und 100, bevorzugt 1 und 30 mg KOH/g, Schmelzviskositäten, gemessen bei 170°C, von 5 bis 10000 mPa.s, bevorzugt 20 bis 5000 mPa.s, und Erweichungspunkte von 80 bis 160°C auf. Eingeschlossen sind auch Derivate solcher Oxidate, wie sie etwa durch deren Veresterung mit ein- oder mehrwertigen aliphatischen oder aromatischen Alkoholen, z.B. Ethanol, Propanolen, Butanolen, Ethandiol, Butandiolen, Glycerin, Trimethylolpropan, Pentaerythrit oder Benzylalkohol hergestellt werden können. Auch ist, im Falle, dass Partialester vorliegen, die weitere Derivatisierung solcher Ester etwa durch Veresterung mit Säurekomponenten wie Acrylsäure oder Methacrylsäure möglich.

Eine weitere Möglichkeit der polaren Modifizierung besteht in der Umsetzung des Metallocen-Polyolefinwachses mit α,β-ungesättigten Carbonsäuren oder deren Derivaten, gegebenenfalls in Gegenwart eines Radikalstarters. Als Beispiele für α,β-ungesättigte Carbonsäuren seien genannt Acrylsäure, Methacrylsäure, Crotonsäure sowie Maleinsäure. Als Beispiele für Derivate von α,β-ungesättigten Carbonsäuren seien deren Ester oder Amide bzw. Anhydride, z.B. Acrylsäurealkylester, Acrylsäureamide, Halb- oder Diester der Maleinsäure, Maleinsäureanhydrid oder Amide der Maleinsäure wie z.B. Maleinimid oder N-Alkyl-substituierte Maleinimide genannt. Es können auch Gemische dieser Verbindungen verwendet werden. Bevorzugt sind Maleinsäure und ihre Abkömmlinge, besonders bevorzugt ist Maleinsäureanhydrid. Die α,β-ungesättigte Carbonsäuren bzw. ihre Derivate kommen in einer Menge, bezogen auf eingesetztes Metallocen-Polyolefinwachs, von 0,1 bis 20 Gew.-% zum Einsatz. Die Herstellung solcher radikalisch erzeugten polaren Umsetzungsprodukte ist beispielsweise in EP 0 941 257 beschrieben. Die durch Umsetzung von Metallocen-Polyolefinwachsen mit α,β-ungesättigten Carbonsäuren und deren Derivaten erhaltenen Materialien weisen Schmelzviskositäten, gemessen bei 170°C, von 5 bis 10000 mPa.s, bevorzugt 10 bis 5000 mPa.s, Verseifungszahlen von 0,1 bis 100 mg KOH/g, bevorzugt 2 bis 80 mg KOH/g, und Erweichungspunkte von 80 bis 160°C, bevorzugt 100 bis 155°C, auf.

In einer bevorzugten Ausführungsform besteht das in dem erfindungsgemäßen Verfahren zur Herstellung des Kerns verwendete Material ausschließlich aus einem oder mehreren Metallocen-Polyolefinwachsen und/oder deren Derivaten.

In einer weiteren bevorzugten Ausführungsform enthält das in dem erfindungsgemäßen Verfahren zur Herstellung des Kerns verwendete Material mindestens 0,1 Gew.-% eines oder mehrerer Metallocen-Polyolefinwachse und/oder deren Derivate.

In einer weiteren bevorzugten Ausführungsform besteht das in dem erfindungsgemäßen Verfahren zur Herstellung des Kerns verwendete Material aus einem oder mehreren Metallocen-Polyolefinwachsen und/oder deren Derivaten und weiteren Substanzen. Sofern weitere Substanzen in diesem Material enthalten sind, ist der Anteil des einen oder der mehreren Metallocen-Polyolefinwachse und/oder deren Derivate bezogen auf das gesamte Material vorzugsweise von 0,1 bis 99, besonders bevorzugt von 10 bis 95 und insbesondere bevorzugt von 20 bis 80 Gew.-%.

Nach Bedarf kann das Kernmaterial auch andere Wachse aus der Gruppe der natürlichen Wachse, der teilsynthetischen oder vollsynthetischen Wachse enthalten. Geeignete Wachse haben einen Schmelzpunkt zwischen 40 und 160°C, bevorzugt 80 bis 140°C, und haben eine Schmelzviskosität von 10 bis 10000 mPa.s, bevorzugt 500 bis 5000 mPa.s. Bevorzugte Vertreter solcher Wachse sind Carnaubawachse, Candelillawachse, Bienenwachs, Montanwachse, Paraffine, mit Ziegler-Katalysatoren hergestellte Polyolefinwachse und Fischer-Tropsch-Wachse.

Ebenso können Harze mit natürlichem oder synthetischem Ursprung im Kernmaterial enthalten sein. Geeignete Harze schmelzen in einem Temperaturbereich von 40 bis 200°C und haben im geschmolzenen Zustand eine Schmelzviskosität von 10 mPas bis zu 100 Pas. Bevorzugte Vertreter sind Kohlenwasserstoffharze, Harze auf Basis Abietinsäure, Baumharze und auch synthetische Harze wie Acrylharze, Ethylenvinylacetatharze und auch wasserlösliche Harze wie Ethylenoxidaddukte oder Polyvinylalkohole.

Sofern andere Wachse als Metallocen-Polyolefinwachse oder Harze im Kernmaterial enthalten sind, ist ihr gemeinsamer Anteil bezogen auf das gesamte Kernmaterial bis zu 99,9 Gew.-% und vorzugsweise von 10 bis 35 Gew.-%.

Im Kernmaterial können auch Antioxidantien enthalten sein. Diese sind bevorzugt ausgewählt aus der Gruppe der Alkansulfonate.

Sofern Antioxidantien im Kernmaterial enthalten sind, ist ihr Anteil bezogen auf das gesamte Kernmaterial bis zu 20 Gew.-% und vorzugsweise von 0,5 bis 3 Gew.-%.

Im Kernmaterial können auch pulverförmige, im Metallocen-Polyolefinwachs unlösliche Füllstoffe enthalten sein. Diese sind bevorzugt ausgewählt aus der Gruppe der Oxide, Silikate und organischen Füllstoffen mit einer Zersetzungstemperatur von über 180°C und einem Schmelzpunkt von über 160°C wie z.B. Holzmehle, Polystyrol, Polyamid und Polytetrafluorethylen, PTFE.

Sofern derartige Füllstoffe im Kernmaterial enthalten sind, ist ihr Anteil bezogen auf das gesamte Kernmaterial bis zu 50 Gew.-% und vorzugsweise von 10 bis 45 Gew.-%.

Im Kernmaterial können auch färbende Stoffe wie z.B. Pigmente oder lösliche Farbstoffe enthalten sein. Diese sind bevorzugt ausgewählt aus der Gruppe bestehend aus organischen und anorganischen Pigmenten sowie Fettfarbstoffen.

Sofern derartige färbende Stoffe im Kernmaterial enthalten sind, ist ihr Anteil bezogen auf das gesamte Kernmaterial bis zu 20 Gew.-% und vorzugsweise von 1 bis 10 Gew.-%.

Im folgenden werden die Herstellung der Kerne, die Beschichtung der Kerne sowie die Entfernung der Kerne aus den Hohlkörpern näher beschrieben.

Herstellung der Kerne:
Da das erfindungsgemäße Kernmaterial im geschmolzenen Zustand bevorzugt dünnflüssig, d.h. gießbar ist, werden Kerne durch Eingießen in temperaturbeständige Formen hergestellt. Die Formen können aus Metall, z.B. Stahl oder Aluminium oder auch aus geeigneten Kunststoffen wie z.B. Silikonkautschuk sein. Das Kernmaterial lässt sich bei Bedarf auch Spitzgießen oder extrudieren.
Nach Erstarren des Kernmaterials wird der Kern entnommen. Die Kerne sind mechanisch stabil, transluzent und lassen sich mechanisch wie Kunststoff bearbeiten.

### Beschichtung der Kerne:

Der ausgeformte Kern wird nun mit dem Wandwerkstoff des späteren Bauteils beschichtet.
Soll der Wandwerkstoff ein Kunststoff sein, so werden Duroplastsysteme, die gegebenenfalls auch Faser-, gewebe- oder teilchenverstärkt sein können, auf die Kernoberfläche aufgebracht und unter den Werkstoffspezifischen Bedingungen zur Aushärtung gebracht.
Soll der Wandwerkstoff ein Metall sein, so wird der Kern mit einem Leitlack oder bereits bei der Kernmaterialherstellung durch Einarbeiten leitfähiger Füllstoffe zunächst elektrisch leitend gemacht und dann galvanisch mit dem gewünschten Metall beschichtet.
Soll der Kern zur Herstellung einer feuerfesten Metallgießform verwendet werden, wird der Kern in eine feuerfeste Formmasse, die zunächst ausgehärtet und später gebrannt wird, eingetaucht und somit beschichtet.

### Entfernung des Kerns:

Die Entfernung des Kerns aus den Formteilen ist nicht grundsätzlich notwendig. Sie ist dann sinnvoll, wenn das herzustellende Formteil ein Hohlkörper sein soll, der hohl bleibt oder der gegebenenfalls mit einem anderen Material, z.B. Kunststoff oder Metall aufgefüllt wird.
Die Entfernung des erfindungsgemäßen Kernmaterials erfolgt durch Ausschmelzen oberhalb der Kernmaterialsschmelzpunktes. Aufgrund der niedrigen Viskosität der Kernmaterialschmelze ist dieser Schritt technisch einfach zu vollziehen und das Kernmaterial kann gegebenenfalls wieder verwendet werden. Soll das Kernmaterial rückstandsfrei aus dem Hohlkörper entfernt werden, so erfolgt eine Nachreinigung mit einem organischen Lösemittel, bevorzugt aus der Gruppe der Benzine gegebenenfalls in Abmischung mit Toluol oder Xylol. Dabei wird das Kernmaterial vollständig herausgelöst und lässt sich gegebenenfalls durch anschließende Trennung vom Lösemittel wieder zurück gewinnen.

Weiterer Gegenstand der vorliegenden Erfindung sind auch die unter Verwendung von Metallocen-Polyolefinwachsen und/oder deren Derivaten hergestellten oder bearbeiteten Hohlkörper.

Die Erfindung wird durch die nachstehenden Beispiele erläutert, ohne sie darauf einzuschränken.

### Beispiel 1: Herstellung eines glasfaserverstärkten Rohres

Das erfindungsgemäße Kernmaterial, bestehend aus einem transluzenten PP-Metallocenwachs (Polypropylen-Metallocenwachs) mit einem Schmelzpunkt von 90°C, einer Schmelzviskosität von 200 mPas, einer Festigkeit von 10 N/mm², bei einer Bruchdehnung von 10 % und einer Kontraktion flüssig-fest von 1 % wurde bei 130°C aufgeschmolzen und in einer zylindrischen Metallform zu einem zylindrischen Hohlkern mit einer Wandstärke von 3 mm vergossen.
Auf den abgekühlten Kern wurde ein mit einem 2 K-Epoxidharz getränktes Glasfasergewebe aufgelegt. Durch Auflegen mehrerer Lagen dieses getränkten Gewebes wurde eine Wandstärke von 5 mm erzeugt.
Das 2 K-Epoxiharzsystem wurde nun bei 40°C innerhalb von 30 Minuten ausgehärtet. Anschließend wurde der Kern durch Ausschmelzen bei 110°C entfernt.

### Beispiel 2: Herstellung eines wabenförmigen Hohlteils aus Kupfer

Das erfindungsgemäße Kernmaterial, bestehend aus einem transluzenten PP-Metallocenwachs mit einem Schmelzpunkt von 100°C, einer Schmelzviskosität von 100 mPas, einer Festigkeit von 15 N/mm², bei einer Bruchdehnung von 10 % und einer Kontraktion flüssig-fest von 1 % wurde mit einer Spritzgießmaschine zu einem wabenförmigen Formteil geformt.
Nach Anbringen eines Kupferdrahtes als Kontakt wurde auf das abgekühlte Kernbauteil eine Metall enthaltende, elektrisch leitende Schicht aufgetragen.
Dieses so vorbereitete Werkstück wurde nun in einer schwefelsauren Kupfersulfatlösung bei einer angelegten Gleichspannung von 3 V verkupfert. Nach 2 Stunden wurde das verkupferte Bauteil von der Spannungsquelle getrennt und aus dem Bad entnommen. Das Kernmaterial wurde durch eine angebrachte Ausflussöffnung bei 140°C rückstandsfrei ausgeschmolzen. Ergebnis war ein durchströmbares wabenartiges Bauteil aus Metall mit einer Wandstärke von 0,15 mm.

### Beispiel 3: Herstellung eines Metallteils durch metallischen Feinguss

Das erfindungsgemäße Kernmaterial, bestehend aus einem transluzenten PP-Metallocenwachs mit einem Schmelzpunkt von 100°C, einer Schmelzviskosität von 100 mPas, einer Festigkeit von 15 N/mm², bei einer Bruchdehnung von 10 % und einer Kontraktion flüssig-fest von 1 % wurde mit einer Spritzgießmaschine zu 10 Schmuck-Formteilen mit einem Schussgewicht von jeweils 4 g geformt. Diese einzelnen Formteile wurden mit aus dem erfindungsgemäßen Kernmaterial vorgefertigten stabförmigen Profilen mit einem Durchmesser d = 4 mm durch Heißverkleben zu einem "Baum" zusammengefügt und dieser anschließend in eine flüssige wasserhaltige Formmasse bestehend aus Ethylsilikat, Quarz und Ton getaucht. Nach Trocknung und Aushärtung der so erzeugten Schale wurde das erfindungsgemäße Kernmaterial durch Ausschmelzen entfernt und die erhaltene Hohlform bei 800°C gebrannt. Nach Abkühlung der Hohlform wurde eine Metallschmelze bestehend aus 750 Teilen Gold und 250 Teilen Silber in diese Form gegossen und abgekühlt. Nach mechanischer Entfernung der Hitze beständigen Formschale wurde der "Metallbaum" entnommen und in die Einzelteile zerlegt. Die abgetrennten Schmuckteile wurden entgratet, gesäubert und poliert.

### Beispiel 4: Schutz eines Werkstücks gegen Vibration

In ein rohrförmiges Bauteil mit einer Wandstärke von 0,5 mm, einem Durchmesser von 50 mm und einer Länge von 150 mm sollte eine Längsnut von 4 mm Breite durch Fräsen angebracht werden.
Damit keine Deformation der dünnwandigen Kontur durch das angreifende Fräswerkzeug erfolgte, wurde das Rohr vorher mit einem Kernmaterial auf Basis Metallocen PP-Wachs mit einem Schmelzpunkt von 90°C, einer Bruchdehnung von 10 % und einer Schmelzviskosität von 150 mPas gefüllt und somit gegen Deformation und Vibration stabilisiert. Nach Abschluss der spanenden Bearbeitung wurde das Wachs über Ausschmelzen und nachgeschaltetes Reinigen mit Lösemittel vollständig entfernt.

## Patentansprüche

1. Verfahren zur Herstellung oder Bearbeitung von Hohlkörpern, **dadurch gekennzeichnet, dass** das Verfahren unter Verwendung eines Materials durchgeführt wird, welches ein oder mehrere Metallocen-Polyolefinwachse und/oder deren Derivate enthält oder aus diesen Substanzen besteht und das nach der Herstellung oder der Bearbeitung der Hohlkörper wieder aus den Hohlkörpern entfernt wird.

2. Verfahren zur Herstellung von Hohlkörpern nach Anspruch 1, **dadurch gekennzeichnet, dass** es folgende Schritte beinhaltet:
i) Formung eines Kernes aus einem Material enthaltend oder bestehend aus einem oder mehreren Metallocen-Polyolefinwachsen und/oder deren Derivaten und
ii) zumindest teilweises Aufbringen eines oder mehrerer Feststoffe auf den Kern.

3. Verfahren zur Herstellung von Hohlkörpern nach Anspruch 1 oder 2, **dadurch gekennzeichnet, dass** die Hohlkörper ausgewählt sind aus metallischen Hohlbauteilen, faser- oder teilchenverstärkten Kunststoffteilen und Metallgießformen.

4. Verfahren zur Herstellung von Hohlkörpern nach Anspruch 3, **dadurch gekennzeichnet, dass** faser- oder teilchenverstärkte Kunststoffteile hergestellt werden und das Material enthaltend oder bestehend aus einem oder mehreren Metallocen-Polyolefinwachsen und/oder deren Derivaten expandierbar ist.

5. Verfahren zur Herstellung von Hohlkörpern nach Anspruch 3, **dadurch gekennzeichnet, dass** metallische Hohlbauteile hergestellt werden und das Material enthaltend oder bestehend aus einem oder mehreren Metallocen-Polyolefinwachsen und/oder deren Derivaten als Bindemittel für die Herstellung leitfähiger Beschichtungen dient.

6. Verfahren zur Herstellung von Hohlkörpern nach Anspruch 3, **dadurch gekennzeichnet, dass** Metallgießformen hergestellt werden und das Material enthaltend oder bestehend aus einem oder mehreren Metallocen-Polyolefinwachsen und/oder deren Derivaten durch Eintauchen in eine feuerfeste Formmasse, die zunächst ausgehärtet und später gebrannt wird, beschichtet wird.

7. Verfahren zur Herstellung von Hohlkörpern nach einem oder mehreren der Ansprüche 1 bis 4, **dadurch gekennzeichnet, dass** das eine oder die mehreren Metallocen-Polyolefinwachse und/oder deren Derivate zusammen mit mindestens einer weiteren Substanz ausgewählt aus natürlichen oder synthetischen Wachsen und natürlichen oder synthetischen Harzen eingesetzt werden.

8. Verfahren zur Bearbeitung von Hohlkörpern nach Anspruch 1, **dadurch gekennzeichnet, dass** es folgende Schritte beinhaltet:
i) Ausfüllen des Hohlkörpers mit einem Material enthaltend oder bestehend aus einem oder mehreren Metallocen-Polyolefinwachsen und/oder deren Derivaten und
ii) Bearbeiten des ausgefüllten Hohlkörpers.

9. Verfahren zur Bearbeitung von Hohlkörpern nach Anspruch 1 oder 8, **dadurch gekennzeichnet, dass** es sich bei der Bearbeitung um eine mechanische Bearbeitung handelt.

10. Verfahren zur Herstellung oder Bearbeitung von Hohlkörpern nach Anspruch 1, **dadurch gekennzeichnet, dass** das Entfernen des Materials enthaltend oder bestehend aus einem oder mehreren Metallocen-Polyolefinwachsen und/oder deren Derivaten durch Ausschmelzen und/oder Auflösen erfolgt.

## Claims

1. A process for production or treatment of hollow articles, which comprises using a material which comprises one or more metallocene polyolefin waxes and/or their derivatives, or which is composed of these substances, and which is in turn removed from the hollow articles after the production or the treatment of the hollow articles.

2. The process for production of hollow articles, as claimed in claim 1, which includes the following steps:
i) molding of a core composed of a material comprising or composed of one or more metallocene polyolefin waxes and/or their derivatives, and
ii) applying one or more solids to at least a portion of the core.

3. The process for production of hollow articles, as claimed in claim 1 or 2, wherein the hollow articles have been selected from hollow metallic components, fiber- or particle-reinforced plastics parts, and metal-casting molds.

4. The process for production of hollow articles, as claimed in claim 3, wherein fiber- or particle-reinforced plastics parts are produced, and the material comprising or composed of one or more metallocene polyolefin waxes and/or their derivatives is expandable.

5. The process for production of hollow articles, as claimed in claim 3, wherein hollow metallic components are produced, and the material comprising or composed of one or more metallocene polyolefin waxes and/or their derivatives serves as binder for production of conductive coatings.

6. The process for production of hollow articles as claimed in claim 3, wherein metal-casting molds are produced, and the material comprising or composed of one or more metallocene polyolefin waxes and/or their derivatives is coated via immersion in a flame-retardant molding composition, which is then hardened and is subsequently fired.

7. The process for production of hollow articles, as claimed in one or more of claims 1 to 4, wherein the one or more metallocene polyolefin waxes and/or their derivatives are used together with at least one other substance selected from natural or synthetic waxes and natural or synthetic resins.

8. The process for treatment of hollow articles, as claimed in claim 1, which includes the following steps:
i) filling of the hollow article with a material comprising or composed of one or more metallocene polyolefin waxes and/or their derivatives, and
ii) treatment of the stored hollow article.

9. The process for treatment of hollow articles, as claimed in claim 1 or 8, which is a mechanical treatment.

10. The process for production or treatment of hollow articles, as claimed in claim 1, wherein the method used to remove the material comprising or composed of one or more metallocene polyolefin waxes and/or their derivatives is removed by melting and/or dissolution.

## Revendications

1. Procédé pour la production ou le façonnage de corps creux, **caractérisé en ce que** le procédé est réalisé en utilisant un matériau qui contient une ou plusieurs cires de métallocène-polyoléfine et/ou leurs dérivés ou est constitué par ces substances et qui est à nouveau éliminé des corps creux après la production ou le façonnage des corps creux.

2. Procédé pour la production de corps creux selon la revendication 1, **caractérisé en ce qu'**il comporte les étapes suivantes :
i) moulage d'un noyau constitué par un matériau contenant ou constitué par une ou plusieurs cires de métallocène-polyoléfine et/ou leurs dérivés et
ii) application au moins partielle d'un ou de plusieurs solides sur le noyau.

3. Procédé pour la production de corps creux selon la revendication 1 ou 2, **caractérisé en ce que** les corps creux sont choisis parmi les pièces creuses métalliques, les pièces en matériau synthétique renforcées par des fibres ou des particules et les moules métalliques.

4. Procédé pour la production de corps creux selon la revendication 3, **caractérisé en ce que** des pièces en matériau synthétique renforcées par des fibres ou des particules sont produites et le matériau contenant ou constitué par une ou plusieurs cires de métallocène-polyoléfine et/ou leurs dérivés est expansible.

5. Procédé pour la production de corps creux selon la revendication 3, **caractérisé en ce que** des pièces creuses métalliques sont produites et le matériau contenant ou constitué par une ou plusieurs cires de métallocène-polyoléfine et/ou leurs dérivés sert de liant pour la production de revêtements conductibles.

6. Procédé pour la production de corps creux selon la revendication 3, **caractérisé en ce que** des moules métalliques sont produits et le matériau contenant ou constitué par une ou plusieurs cires de métallocène-polyoléfine et/ou leurs dérivés est revêtu par immersion dans une masse de moulage réfractaire, qui est d'abord durcie et calcinée ultérieurement.

7. Procédé pour la préparation de corps creux selon l'une ou plusieurs des revendications 1 à 4, **caractérisé en ce que** ladite une ou lesdites plusieurs cires de métallocène-polyoléfine et/ou leurs dérivés est/sont utilisée(s) ensemble avec au moins une autre substance choisie parmi les cires naturelles ou synthétiques et les résines naturelles et synthétiques.

8. Procédé pour le façonnage de corps creux selon la revendication 1, **caractérisé en ce qu'**il comporte les étapes suivantes :
i) remplissage du corps creux avec un matériau contenant ou constitué par une ou plusieurs cires de métallocène-polyoléfine et/ou leurs dérivés et
ii) façonnage du corps creux rempli.

9. Procédé pour le façonnage de corps creux selon la revendication 1 ou 8, **caractérisé en ce qu'**il s'agit, pour le façonnage, d'un façonnage mécanique.

10. Procédé pour la production ou le façonnage de corps creux selon la revendication 1, **caractérisé en ce que** l'élimination du matériau contenant ou constitué par une ou plusieurs cires de métallocène-polyoléfine et/ou leurs dérivés est réalisée par fusion et/ou dissolution.
